# EUROPÄISCHE PATENTSCHRIFT

(11) **EP 3 819 098 B1**
(45) Veröffentlichungstag und Bekanntmachung des Hinweises auf die Patenterteilung: **10.08.2022**
(21) Anmeldenummer: 20202163.0
(22) Anmeldetag: 16.10.2020
(51) Int. Cl.: B29C 49/58, B29C 49/06

(54) **BLASDORNVORRICHTUNG, ANORDNUNG AUFWEISEND EINE BLASDORNVORRICHTUNG UND EIN BLASDORNWERKZEUG UND VERFAHREN ZUM BLASFORMEN**
BLOW MANDREL DEVICE, ASSEMBLY COMPRISING A BLOW MANDREL DEVICE AND A BLOW MANDREL TOOL AND BLOW MOULDING METHOD
DISPOSITIF DE MANDRIN DE SOUFFLAGE, AGENCEMENT COMPORTANT UN DISPOSITIF DE MANDRIN DE SOUFFLAGE ET UN OUTIL PINCE DE SOUFFLAGE ET PROCÉDÉ DE MOULAGE PAR SOUFFLAGE

(30) Priorität: 06.11.2019 DE 102019129845
(43) Veröffentlichungstag der Anmeldung: 12.05.2021
(73) Patentinhaber: MEISSNER AG MODELL- UND WERKZEUGFABRIK, 35216 Biedenkopf-Wallau (DE)
(72) Erfinder: Flötzinger, Ulrich, 57334 Bad Laasphe (DE); Bamberger, Florian, 25232 Dautphetal (DE)
(74) Vertreter: Angerhausen, Christoph

(56) Entgegenhaltungen:
- DE-A1- 2 545 130
- GB-A- 1 140 912
- GB-A- 1 280 863
- JP-A- H09 109 237
- US-A- 3 449 480

## Beschreibung

Die Erfindung geht aus von einer Blasdornvorrichtung zum Blasformen von Blasformteilen mit einer Blasdorneinheit und einem Halter, wobei die Blasdorneinheit einen Blasdorn aufweist und von dem Halter gehalten wird. Ferner ist die Blasdorneinheit drehbar in dem Halter gelagert, wobei die Blasdornvorrichtung eine Schwenkeinheit zum Verschwenken der Blasdorneinheit aus einer ersten Position in eine von der ersten Position verschiedene zweite Position relativ zu dem Halter aufweist, wobei die erste Position einer Aufstülpposition eines Vorformlings auf den Blasdorn entspricht

Eine entsprechende Blasdornvorrichtung, sowie eine Anordnung aufweisend eine Blasdornvorrichtung und ein Blasformwerkzeug sind aus der GB 1, 140 912 A bekannt. Ein Verfahren und eine Vorrichtung zur Herstellung von Blasformteilen, welche ebenfalls die Verwendung einer Blasdornvorrichtung mit einer Schwenkeinheit zum Verschwenken der Blasdorneinheit aufweisen, sind respektive aus der US 3,449,480 beziehungsweise aus der JPH09 109237 A bekannt. Eineweitere Blasdornvorrichtung sowie eine Verfahren zum Blasformen sind auch aus der WO 2014/20931 A1 bekannt. Die dort beschriebene Blasdornvorrichtung wird linear in senkrechter Richtung zu einem Blaswerkzeug und einem in das Blaswerkzeug eingesetzten Vorformling verfahren, so dass der Blasdorn der Blasdornvorrichtung in den Vorformling eingreift. Anschließend kann der Vorformling zu einem Blasformteil geblasen werden.

Damit ergibt sich eine relativ hohe Bauhöhe der Blasdornvorrichtung bzw. der Anordnung aus Blasdornvorrichtung und Blasformwerkzeug. Sollen insbesondere große Einfüllrohre, Behälter, Tanks oder dergleichen geblasen werden, ergibt sich ein großer Platzbedarf für das Manövrieren des Vorformlings und des Blasformteils.

Es ist deshalb die Aufgabe der vorliegenden Erfindung, eine Blasdornvorrichtung und eine Anordnung aufweisend eine Blasdornvorrichtung und ein Blasformwerkzeug bereitzustellen, die flexibler und platzsparender aufgestellt werden können. Zudem wird ein entsprechendes Verfahren zum Blasformen bereitgestellt, das ebenfalls flexibel und platzsparend umgesetzt ist. Diese Aufgabe wird dadurch gelöst, dass die Blasdornvorrichtung eine Fixiereinheit zum Fixieren des Vorformlings an dem Blasdorn nach dem Aufstülpen aufweist. Nach dem Aufstülpen wird der Vorformling an dem Blasdorn fixiert. Durch die Fixierung wird beispielsweise sichergestellt, dass der Vorformling beim Verschwenken nicht von dem Blasdorn gelöst wird und/oder auch nach dem Verschwenken in die zweite Position auf dem Blasdorn aufgestülpt ist.

. Da die Blasdorneinheit verschwenkbar ist, kann das Blasformwerkzeug von der Blasdorneinheit versetzt, insbesondere unter einem Winkelversatz, angeordnet werden, wodurch die Bauhöhe der Anordnung deutlich reduziert werden kann. Analog kann der Vorformling unter dem Winkel zugeführt werden.

Die Druckschrift DE 2545130 offenbart eine Blasdomvorrichtung zum Blasformen von Blasformteilen, mit einer Blasdorneinheit und einem Halter, wobei die Blasdomeinheit einen Blasdorn aufweist und von dem Halter gehalten wird, wobei die Blasdorneinheit verschwenkbar in dem Halter gelagert ist und die Blasdomvorrichtung eine Schwenkeinheit zum Verschwenken der Blasdorneinheit aus einer ersten Position in eine von der ersten Position verschiedene zweite Position relativ zu dem Halter aufweist, wobei die erste Position eine Aufstülpposition für einen Vorformling auf den Blasdorn ist,dadurch gekennzeichnet, dassdie Blasdornvorrichtung eine Fixiereinheit zum Fixieren eines Vorformlings an dem Blasdorn aufweist. Dazu offenbart die Druckschrift DE 2545130 ein Verfahren zum Blasformen eines Blasformteils, wobei das Verfahren die folgenden Schritte aufweist: - Aufstülpen und gleichzeitig Fixieren eines Vorformlings auf einem Blasdorn einer Blasdorneinheit in einer ersten Position der Blasdorneinheit; - Verschwenken der Blasdorneinheit in eine von der ersten Position verschiedene zweite Position, wobei der Vorformling bei dem Verschwenken in ein Blasformwerkzeug mit zwei Werkzeughälften eingeschwenkt wird, das in einer Werkzeugoffenstellung angeordnet ist; - Überführen der Werkzeughälften des Blasformwerkzeugs aus der Werkzeugoffenstellung in eine Werkzeugschließstellung, so dass die beiden Werkzeughälften einen Hohlraum bilden, in dem der Vorformling aufgenommen ist; - Blasformen des Vorformlings zu einem Blasformteil und Abkühlen des Blasformteils.

Der Halter kann einstückig oder mehrstückig ausgebildet sein. In der Aufstülpposition kann der Vorformling auf den Blasdorn aufgestülpt werden, z.B. mit Hilfe eines Roboters. Der Vorformling kann schlauchförmig oder rohrförmig sein. Vorzugsweise besteht der Vorformling aus einem Kunststoff. Es kann vorgesehen sein, dass der Vorformling mittels eines Extruders extrudiert wird. Die Blasdornvorrichtung kann ein Schneideelement zum Zuschneiden des Vorformlings aufweisen, z.B. ein Messer oder einen Heizdraht. So kann vorgesehen sein, nach dem Aufstülpen und/oder gegebenenfalls nach dem Fixieren des Vorformlings den Vorformling mit dem Schneidelement zuzuschneiden. Es kann aber auch vorgesehen sein, dass der Vorformling bereits zugeschnitten auf den Blasdorn aufgestülpt wird. Bevorzugt ist die Blasdorneinheit in der ersten Position derart ausgerichtet, dass der Vorformling vertikal von oben nach unten auf den Blasdorn aufgestülpt werden kann.

Die Erfindung betrifft eine Blasdornvorrichtung gemäß dem Anspruch 1.

Die Blasdornvorrichtung kann eine Vorzentrierung aufweisen, die den Vorformling beim Aufstülpen auf den Blasdorn führt. Damit kann sichergestellt werden, dass der Vorformling beim Aufstülpen auf den Blasdorn trifft bzw. der Vorformling sicher, zuverlässig und reproduzierbar auf den Blasdorn aufgestülpt wird. Es ist vorgesehen sein, dass der Vorformling nach dem Aufstülpen an dem Blasdorn fixiert wird. Die Vorzentrierung kann mehrstückig sein. Bevorzugt ist die Vorzentrierung zweistückig ausgebildet und weist zwei zueinander verstellbare Hälften auf.

Die Vorzentrierung kann an dem Halter angeordnet sein und zwei Vorzentrierungshälften aufweisen, die aus einer Schließstellung in eine Offenstellung überführbar sein können, wobei die Vorzentrierung in der ersten Position in der Schließstellung und in der zweiten Position in der Offenstellung angeordnet sein kann. In der Schließstellung kann der Vorformling durch die Vorzentrierung hindurchgeführt und auf den Blasdorn aufgestülpt werden. Nachdem der Vorformling auf den Blasdorn aufgestülpt worden ist, kann die Vorzentrierung durch Überführen in die Offenstellung den aufgestülpten Vorformling freigeben, so dass die Blasdorneinheit und damit der aufgestülpte und ggf. fixierte Vorformling verschwenkt werden kann.

Die Vorzentrierung kann in ihrer Schließstellung eine ringförmige Führungsöffnung aufweisen, so dass der Vorformling beim Aufstülpen auf den Blasdorn durch die ringförmige Führungsöffnung geführt werden kann. Eine derartige ringförmige Führungsöffnung ist besonders dann vorteilhaft, wenn der Vorformling schlauch- oder rohrförmig ist, da dieser dann besonders gut geführt werden kann.

Die Schwenkeinheit kann eine mit der Blasdorneinheit verbundene Drehkinematik und einen Linearantrieb aufweisen, wobei die Drehkinematik von dem Linearantrieb betätigbar und an dem Halter befestigt sein kann, so dass die Blasdorneinheit bei Betätigung des Linearantriebs zwischen der ersten Position und der zweiten Position verschwenkt werden kann.

Die Drehkinematik kann einen Antriebsarm, mindestens eine Pendelstütze und eine Hubstrebe aufweisen, wobei der Antriebsarm über die Pendelstütze mit der Hubstrebe mechanisch verbunden sein kann und wobei der Linearantrieb mit dem Antriebsarm mechanisch verbunden sein kann, so dass bei einer Verschwenkung der Hubstrebe unter Betätigung des Linearantriebs die Blasdorneinheit verschwenkt werden kann. Die Hubstrebe kann dazu an der Blasdorneinheit befestigt oder mit dieser verbunden sein.

Die erste Position kann relativ zu der zweiten Position unter einem Winkel von 70° - 180°, bevorzugt 80° - 120°, und besonders bevorzugt 90° ausgerichtet sein.

Die Blasdorneinheit kann von der ersten Position in die zweite Position um eine im Wesentlichen horizontal ausgerichtete Schwenkachse und die Blasdornvorrichtung vorzugsweise um eine zweite im Wesentlichen vertikal ausgerichtete Schwenkachse verschwenkbar sein. Sind zwei Schwenkachsen vorgesehen, so kann die Blasdorneinheit und damit der aufgestülpte Vorformling dreidimensional im Raum verschwenkt werden. In einigen Ausführungsformen kann vorgesehen sein, dass die zweite Schwenkachse mit der Aufstülprichtung des Vorformlings in der Aufstülpposition zusammenfällt und/oder parallel zu dieser angeordnet ist.

Die Erfindung betrifft weiterhin eine Anordnung aufweisend eine erfindungsgemäße Blasdornvorrichtung und ein Blasformwerkzeug, wobei das Blasformwerkzeug zwei Werkzeughälften mit einer Werkzeugschließstellung und einer Werkzeugoffenstellung aufweist, wobei der Vorformling in der zweiten Position in das Blasformwerkzeug in der Werkzugoffenstellung eingeschwenkt ist. Bevorzugt wird der Vorformling bzw. die Blasdorneinheit beim Schließen der Werkzeughälften nicht weiter verschwenkt, so dass die Blasdorneinheit auch in der Schließstellung in der zweiten Position ist.

Die Blasdorneinheit kann Rastelemente zum Eingriff in korrespondierende Rastaufnahmen der Werkzeughälften in der Werkzeugschließstellung aufweisen, so dass die Blasdorneinheit in der Werkzeugschließstellung an dem Blasformwerkzeug fixiert sein kann. Damit kann ein Wegkippen oder eine Bewegung der Blasdorneinheit relativ zu dem Blasformwerkzeug beim Blasformen und/oder beim anschließenden Kalibriervorgang verhindert werden, so dass sich eine hohe Qualität des Blasformteils ergeben kann.

Die Erfindung betrifft zudem ein Verfahren zum Blasformen eines Blasformteils, wobei das Verfahren die folgenden Schritte aufweist:
- Aufstülpen und, nach dem Aufstülpen, Fixieren eines Vorformlings auf einem Blasdorn einer Blasdorneinheit in einer ersten Position der Blasdorneinheit;
- Verschwenken der Blasdorneinheit in eine von der ersten Position verschiedene zweite Position, wobei der Vorformling bei dem Verschwenken in ein Blasformwerkzeug mit zwei Werkzeughälften eingeschwenkt wird, wobei das Blasformwerkzeug in einer Werkzeugoffenstellung ist;
- Überführen der Werkzeughälften des Blasformwerkzeugs aus der Werkzeugoffenstellung in eine Werkzeugschließstellung, so dass die beiden Werkzeughälften einen Hohlraum bilden, in dem der Vorformling aufgenommen ist;
- Blasformen des Vorformlings zu einem Blasformteil und abkühlen des Blasformteils.

Nach dem Blasformen des Vorformling und abkühlen des Blasformteils bzw. dem Kalibriervorgang können die Werkzeughälften in die Werkzeugoffenstellung überführt werden.

Anschließend kann das Blasformteil entnommen werden und die Blasdorneinheit wieder in die erste Position verschwenkt werden. Beim Verschwenken der Blasdorneinheit kann die Blasdorneinheit aus der ersten Position um einen Winkel von 70° - 180°, bevorzugt 80° - 120°, und besonders bevorzugt 90° in die zweite Position verschwenkt werden.

Beim Aufstülpen des Vorformlings kann der Vorformling durch eine Vorzentrierung auf den Blasdorn geführt werden. Die Vorzentrierung kann mehrstückig sein. Bevorzugt kann die Vorzentrierung zweistückig sein.

Vor dem Aufstülpen des Vorformlings kann die Vorzentrierung in eine Schließstellung und vor dem Verschwenken der Blasdorneinheit aus der Schließstellung in eine Offenstellung überführt werden. In der Schließstellung kann der Vorformling durch die Vorzentrierung hindurchgeführt und auf den Blasdorn aufgestülpt werden. In der Schließstellung kann die Vorzentrierung eine ringförmige Öffnung aufweisen, durch die der Vorformling hindurchgeführt werden kann. Nachdem der Vorformling auf den Blasdorn aufgestülpt worden ist, kann die Vorzentrierung durch überführen in die Offenstellung den aufgestülpten Vorformling freigeben, so dass die Blasdorneinheit und damit der aufgestülpte und ggf. fixierte Vorformling z.B. in das geöffnete Blasformwerkzeug verschwenkt werden kann.

Bei dem Verschwenken der Blasdorneinheit kann ein Linearantrieb betätigt werden, der über einen Schwenkarm und mindestens eine Pendelstütze eine Hubstrebe antreiben kann, so dass durch Verschwenken der Hubstrebe die Blasdorneinheit verschwenkt werden kann. Die Hubstrebe kann dazu an der Blasdorneinheit befestigt oder mit dieser verbunden sein.

Bei dem Überführen der Werkzeughälften in die Werkzeugschließstellung können Rastelemente der Blasdorneinheit in korrespondierende Rastaufnahmen der Werkzeughälften eingreifen, so dass die Blasdorneinheit in der Werkzeugschließstellung an dem Blaswerkzeug fixiert werden kann.

Beispielhafte Ausführungsformen der Erfindung werden anhand der nachstehenden Figuren genauer erläutert. Dabei zeigt:
- Figur 1: eine perspektivische Ansicht einer Ausführungsform einer erfindungsgemäßen Blasdornvorrichtung in der ersten Position;
- Figur 2: eine Seitenansicht der in Figur 1 gezeigten Ausführungsform einer erfindungsgemäßen Blasdornvorrichtung in der ersten Position;
- Figur 3: eine perspektivische Ansicht der in Figur 1 gezeigten Ausführungsform einer erfindungsgemäßen Blasdornvorrichtung in der zweiten Position; und
- Figur 4: eine perspektivische Ansicht einer Ausführungsform einer erfindungsgemäßen Anordnung aufweisend eine Blasdornvorrichtung und ein Blasformwerkzeug.

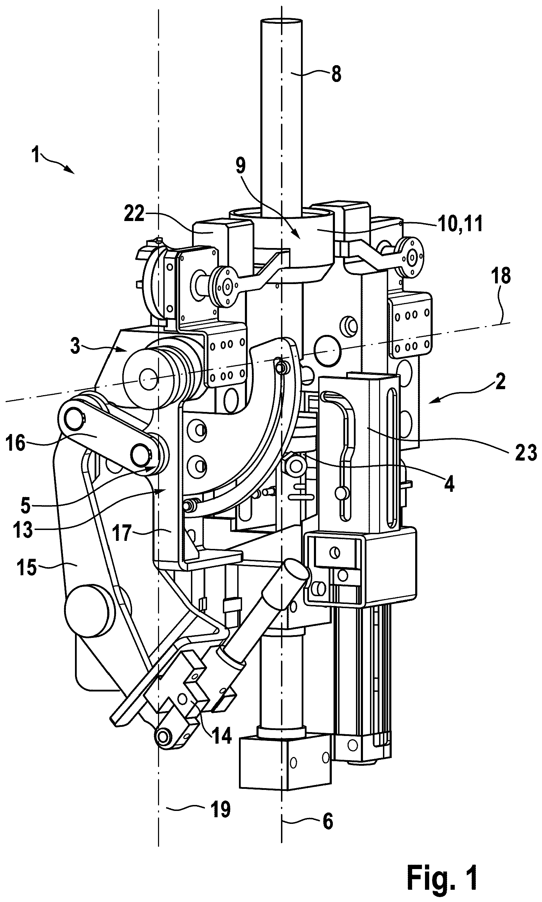

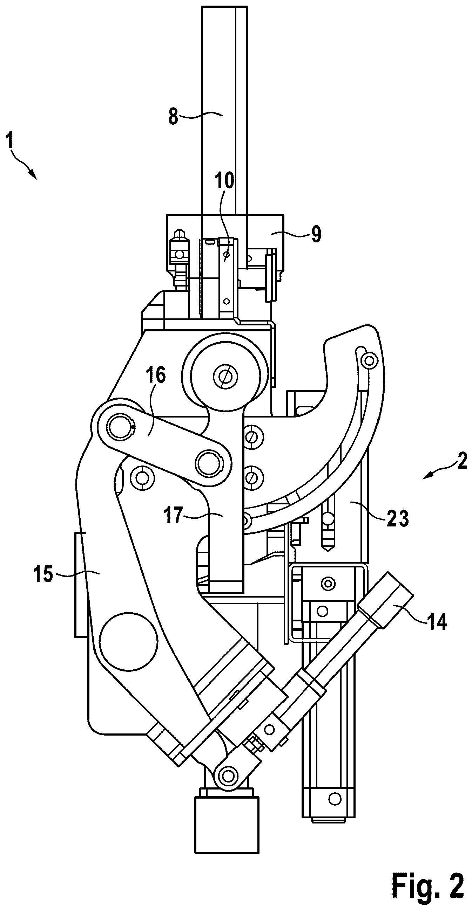

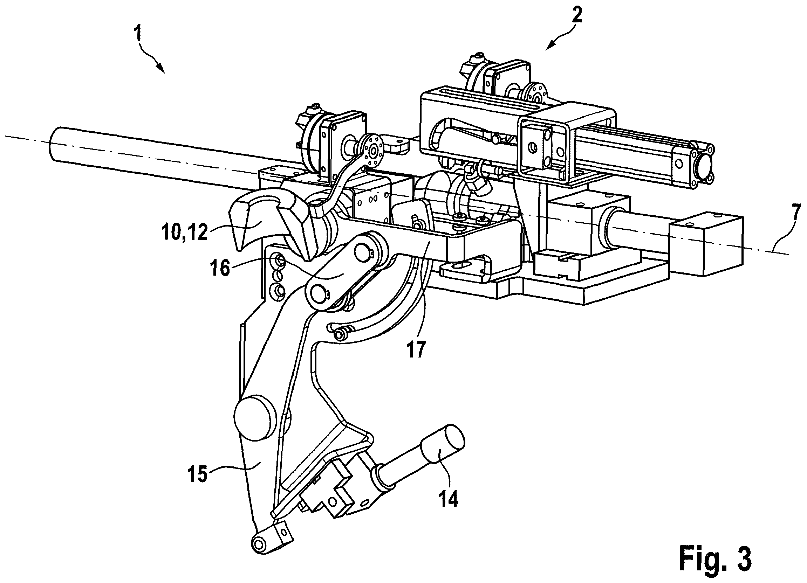

Figur 1 zeigt eine erfindungsgemäße Ausführungsform einer Blasdornvorrichtung 1 in perspektivische Ansicht und Figur 2 die in Figur 1 gezeigte Ausführungsform in einer Seitenansicht. Die Blasdornvorrichtung 1 weist eine Blasdorneinheit 2 und einen Halter 3 auf. Die Blasdorneinheit 2 weist einen Blasdorn 4 auf und ist gegenüber dem Halter 3 verschwenkbar. Der Halter 3 kann mehrstückig ausgeführt sein. Die Blasdorneinheit 2 kann durch eine Schwenkeinheit 5 aus der in Figur 1 gezeigten ersten Position 6 verschwenkt werden. Wie in Figur 1 gezeigt kann ein Vorformling 8 auf den Blasdorn 4 aufgestülpt werden. Um ein zuverlässiges und/oder reproduzierbares Aufstülpen sicherzustellen, kann die Blasdornvorrichtung 1 eine Vorzentrierung 9 aufweisen. Die Vorzentrierung 9 kann mehrstückig und/oder an dem Halter 3 befestigt sein. Bevorzugt ist die Vorzentrierung 9 zweistückig mit zwei Vorzentrierungshälften 10 ausgeführt, wie in Figur 1 gezeigt. Es kann vorgesehen sein, dass die Vorzentrierung 9 aus einer in Figur 1 gezeigten Schließstellung 11 in eine in Figur 3 gezeigte Offenstellung 12 überführt werden kann. In der Schließstellung 11 kann die Vorzentrierung 9 eine ringförmige Öffnung aufweisen, durch die der Vorformling 8 auf den Blasdorn 4 geführt werden kann. In der in Figur 1 gezeigten Ausführungsform ist die ringförmige Führungsöffnung durch die beiden Vorzentrierungshälften 10 in der Schließstellung 11 gebildet. Die in Figur 1 gezeigte Blasdornvorrichtung 1 weist eine Fixiereinheit 23 auf. Durch die Fixiereinheit 23 kann der Vorformling 8 nach dem Aufstülpen an dem Blasdorn 4 fixiert werden. Der Vorformling 8 weist bevorzugt eine schlauchförmige oder rohrförmige Form auf. Weiter bevorzugt kann der Vorformling 8 aus einem Kunststoff oder einem Kunststoffgemisch bestehen und z.B. durch einen Extruder extrudiert worden sein. Die Schwenkeinheit 5 weist eine mit der Blasdorneinheit 2 verbundene Drehkinematik 13 und einen Linearantrieb 14 auf. Durch betätigen des Linearantriebs 14 kann die Drehkinematik 13 und die damit verbundene Blasdorneinheit 2 verschwenkt werden. In einer bevorzugten Ausführungsform weist die Drehkinematik 13 einen Antriebsarm 15, eine Pendelstütze 16 und eine Hubstrebe 17 auf. Bei der in Figur 1 gezeigten Ausführungsform ist der Antriebsarm 15 mit dem Halter 3 derart gekoppelt, dass der Antriebsarm 15 relativ zu dem Halter 3 verdreht werden kann. Der Linearantrieb 14 ist mit dem Antriebsarm 15 mechanisch verbunden, so dass eine lineare Bewegung des Linearantriebs 14 zu einer Verdrehung des Antriebsarms 15 führt. Bei der in Figur 1 gezeigten Ausführungsform ist die Hubstrebe 17 relativ zu dem Halter 3 drehbar gelagert und mit der Blasdorneinheit 2 verbunden. Der Antriebsarm 15 ist über die Pendelstütze 16 mit der Hubstrebe 17 mechanisch verbunden, so dass eine Drehung des Antriebsarms 15 zu einer Drehung der Hubstrebe 17 und damit einer Verschwenkung der Blasdorneinheit 2 um die Schwenkachse 18 führt. Die Schwenkachse 18 kann im Wesentlichen horizontal ausgerichtet sein. Es kann vorgesehen sein, dass die Blasdornvorrichtung 1 um eine zweite Schwenkachse 19 verschwenkbar ist. Die zweite Schwenkachse 19 kann im Wesentlichen vertikal ausgerichtet sein. Die Blasdornvorrichtung 1 kann zum Verschwenken um die zweite Schwenkachse 19 eine, in Figur 1 nicht gezeigte, geeignete Lagerung und einen, in Figur 1 nicht gezeigten, geeigneten Antrieb aufweisen.

Figur 3 zeigt eine perspektivische Ansicht der erfindungsgemäßen Ausführungsform der in den Figuren 1 und 2 gezeigten Blasdornvorrichtung 1 in der zweiten Position 7. Wie in der Zusammenschau der Figuren 1 und 3 gezeigt, ist die Blasdornvorrichtung 1 aus der ersten Position 6 in die zweite Position 7 verschwenkt. Die erste Position kann relativ zu der zweiten Position 7 unter einem Winkel von 70° - 180°, bevorzugt 80° - 120°, und besonders bevorzugt 90° ausgerichtet sein. In der zweiten Position kann die Vorzentrierung 9 wie aus Figur 3 ersichtlich in einer Offenstellung 12 sein. Durch das Überführen der Vorzentrierung 9 aus der Schließstellung 11, in der der Vorformling 8 auf dem Blasdorn 4 geführt und von der Vorzentrierung 9 gehalten wird, in die Offenstellung 12 wird der auf den Blasdorn 4 aufgestülpte Vorformling 8 freigegeben und kann gemeinsam mit der Blasdorneinheit 2 verschwenkt werden.

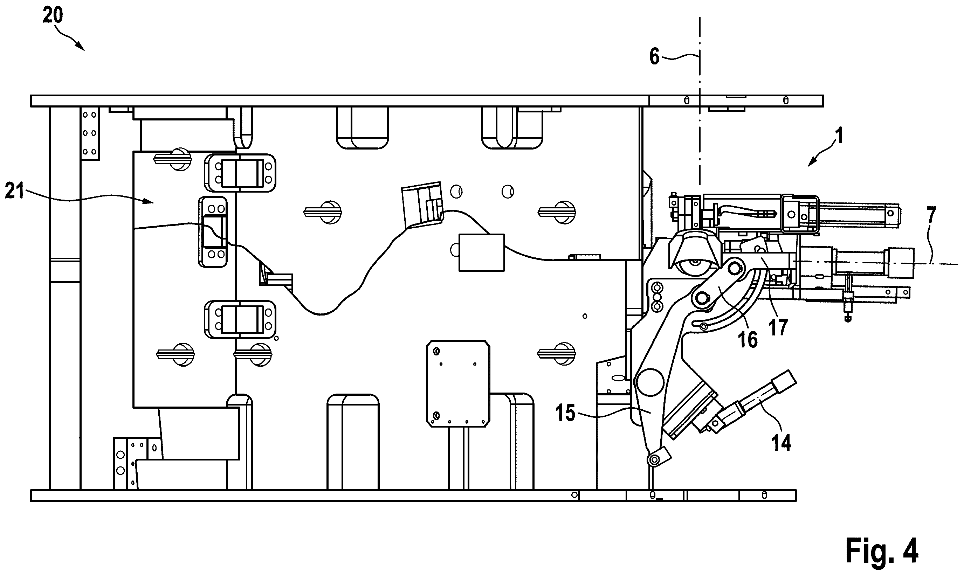

Figur 4 zeigt eine erfindungsgemäße Anordnung 20 aus einer Blasdornvorrichtung 1 und einem Blasformwerkzeug 21. Beim Verschwenken der Blasdorneinheit 2 aus der ersten Position 6 in die in Figur 4 gezeigte zweite Position 7 wird der Vorformling 8 in das Blasformwerkzeug 21 eingeschwenkt. Bevorzugt weist das Blasformwerkzeug 21 zwei Werkzeughälften mit einer Werkzeugschließstellung und einer Werkzeugoffenstellung auf, wobei sich das Blasformwerkzeug 21 bzw. die Werkzeughälften beim Verschwenken der Blasdorneinheit 2 bzw. beim einschwenken des Vorformling 8 in das Blasformwerkzeug 21 in der Offenstellung befinden. Nach Verschwenkung der Blasdorneinheit 2 in die zweite Position kann das Blasformwerkzeug 21 bzw. die Werkzeughälften in die Werkzeugschließstellung überführt werden. In der Werkzeugschließstellung können die beiden Werkzeughälften einen Hohlraum bilden, in dem der Vorformling 8 aufgenommen ist. Bevorzugt entspricht die Form bzw. Kontur des Hohlraums derjenigen des zu blasenden Blasformteils. Es kann vorgesehen sein, dass nach Schließen der Werkzeughälften und vor dem Blasen des Blasformteils der Vorformling 8 durch eine an der Blasdorneinheit 2 vorgesehene Streckeinheit gestreckt werden kann. Es kann vorgesehen sein, dass der Vorformling 8 erwärmt wird. Ist das Blasformwerkzeug 21 geschlossen, so kann der Vorformling 8 zu einem Blasformteil geblasen werden. An das Blasformen des Blasformteils kann sich ein Kalibriervorgang anschließen. Das Blasformteil kann abgekühlt werden. Dazu kann das Blasformwerkzeug 21 eine geeignete Kühlvorrichung aufweisen und/oder geeignet gekühlt werden. Nach dem Abkühlen des Blasformteils kann das Blasformwerkzeug 21 geöffnet, das Blasformteile entnommen und die Blasdorneinheit 2 aus der zweiten Position 7 in die erste Position 6 verschwenkt werden. Wie aus Figur 1 ersichtlich kann die Blasdorneinheit 2 Rastelemente 22 aufweisen. Die Werkzeughälften und/oder das Blasformwerkzeug 21 können den Rastelementen 22 entsprechende Rastaufnahmen aufweisen. Beim Überführen der Werkzeughälften in die Werkzeugschließstellung können die Rastelemente 22 der Blasdorneinheit 2 in die Rastaufnahmen eingreifen bzw. in Eingriff treten. Beim Öffnen des Werkzeugs können die Rastelemente 22 wieder von den Rastaufnahmen gelöst oder getrennt werden. Damit kann die Blasdorneinheit 2 an dem Blasformwerkzeug 21 in der Werkzeugschließstellung fixiert werden. Insbesondere kann damit beim Blasformen und/oder Kalibriervorgang eine Relativbewegung der Blasdorneinheit 2 und dem Blaswerkzeug 21 verhindert oder zumindest verringert werden.

Die in der vorstehenden Beschreibung, in den Zeichnungen sowie in den Ansprüchen offenbarten Merkmale können sowohl einzeln als auch in beliebiger Kombination für die Verwirklichung der Erfindung wesentlich sein.

### Bezugszeichenliste

- 1: Blasdornvorrichtung
- 2: Blasdorneinheit
- 3: Halter
- 4: Blasdorn
- 5: Schwenkeinheit
- 6: erste Position
- 7: zweite Position
- 8: Vorformling
- 9: Vorzentrierung
- 10: Vorzentrierungshälfte
- 11: Schließstellung
- 12: Offenstellung
- 13: Drehkinematik
- 14: Linearantrieb
- 15: Antriebsarm
- 16: Pendel stütze
- 17: Hub strebe
- 18: horizontale Schwenkachse
- 19: vertikale Schwenkachse
- 20: Anordnung
- 21: Blasformwerkzeug
- 22: Rastelemente
- 23: Fixiereinheit

## Patentansprüche

1. Blasdornvorrichtung (1) zum Blasformen von Blasformteilen, mit einer Blasdorneinheit (2) und einem Halter (3), wobei die Blasdorneinheit (2) einen Blasdorn (4) aufweist und von dem Halter (3) gehalten wird, wobei die Blasdorneinheit (2) verschwenkbar in dem Halter (3) gelagert ist und die Blasdornvorrichtung (1) eine Schwenkeinheit (5) zum Verschwenken der Blasdorneinheit (2) aus einer ersten Position (6) in eine von der ersten Position (6) verschiedene zweite Position (7) relativ zu dem Halter (3) aufweist, wobei die erste Position (6) eine Aufstülpposition für einen Vorformling (8) auf den Blasdorn (4) ist, **dadurch gekennzeichnet, dass** die Blasdornvorrichtung (1) eine Fixiereinheit (23) zum Fixieren eines Vorformlings (8) an dem Blasdorn (4) nach dem Aufstülpen aufweist.

2. Blasdornvorrichtung (1) nach Anspruch 1, wobei die Blasdornvorrichtung (1) eine Vorzentrierung (9) aufweist, von der der Vorformling (8) beim Aufstülpen auf den Blasdorn (4) geführt ist, wobei die Vorzentrierung (9) bevorzugt mehrteilig ausgebildet ist.

3. Blasdornvorrichtung (1) nach Anspruch 2, wobei die Vorzentrierung (9) an dem Halter (3) angeordnet ist und zwei Vorzentrierungshälften (10) aufweist, die jeweils aus einer Schließstellung (11) in eine Offenstellung (12) überführbar sind, wobei die Vorzentrierung (9) in der ersten Position (6) der Blasdorneinheit (2) in der Schließstellung (11) und in der zweiten Position (7) der Blasdorneinheit (2) in der Offenstellung (12) angeordnet ist.

4. Blasdornvorrichtung (1) nach Anspruch 3, wobei die Vorzentrierung (9) in der Schließstellung (11) eine ringförmige Führungsöffnung aufweist, durch die der Vorformling (8) beim Aufstülpen auf den Blasdorn (4) hindurch geführt ist.

5. Blasdornvorrichtung (1) nach einem der vorangegangenen Ansprüche, wobei die Schwenkeinheit (5) eine mit der Blasdorneinheit (2) verbundene Drehkinematik (13) und einen Linearantrieb (14) aufweist, wobei die Drehkinematik von dem Linearantrieb (14) betätigbar und an dem Halter (3) befestigt ist, so dass die Blasdorneinheit (2) bei Betätigung des Linearantriebs (14) zwischen der ersten (6) Position und der zweiten Position (7) verschwenkt wird.

6. Blasdornvorrichtung (1) nach Anspruch 5, wobei die Drehkinematik (13) einen Antriebsarm (15), mindestens eine Pendelstütze (16) und eine Hubstrebe (17) aufweist, wobei der Antriebsarm (15) über die Pendelstütze (16) mit der Hubstrebe (17) mechanisch verbunden ist und wobei der Antriebsarm (15) von dem Linearantrieb (14) angetrieben ist, so dass bei einer Verschwenkung der Hubstrebe (17) unter Betätigung des Linearantriebs (14) die Blasdorneinheit (2) verschwenkt wird.

7. Blasdornvorrichtung (1) nach einem der vorangegangenen Ansprüche, wobei die erste Position (6) relativ zu der zweiten Position (7) unter einem Winkel von 70° - 180°, bevorzugt 80° - 120°, und besonders bevorzugt 90° ausgerichtet ist.

8. Blasdornvorrichtung (1) nach einem der vorangegangenen Ansprüche, wobei die Blasdorneinheit (2) von der ersten Position (6) in die zweite Position (7) um eine im Wesentlichen horizontal ausgerichtete Schwenkachse (18) und die Blasdornvorrichtung (1) vorzugsweise um eine zweite im Wesentlichen vertikal ausgerichtete Schwenkachse (19) verschwenkbar ist.

9. Anordnung (20) aufweisend eine Blasdornvorrichtung (1) nach einem der vorangegangenen Ansprüche und ein Blasformwerkzeug (21), wobei das Blasformwerkzeug (21) zwei Werkzeughälften mit einer Werkzeugschließstellung und einer Werkzeugoffenstellung aufweist, wobei der Vorformling (8) in der zweiten Position (7) in das Blasformwerkzeug (21) eingeschwenkt ist.

10. Anordnung (20) nach Anspruch 9, wobei die Blasdorneinheit Rastelemente (22) zum Eingriff in korrespondierende Rastaufnahmen der Werkzeughälften in der Werkzeugschließstellung aufweist, so dass die Blasdorneinheit (2) in der Werkzeugschließstellung an dem Blasformwerkzeug (21) fixiert ist.

11. Verfahren zum Blasformen eines Blasformteils, wobei das Verfahren die folgenden Schritte aufweist:
- Aufstülpen und, nach dem Aufstülpen, Fixieren eines Vorformlings (8) auf einem Blasdorn (4) einer Blasdorneinheit (2) in einer ersten Position (6) der Blasdorneinheit (2);
- Verschwenken der Blasdorneinheit (2) in eine von der ersten Position (6) verschiedene zweite Position (7), wobei der Vorformling (8) bei dem Verschwenken in ein Blasformwerkzeug (21) mit zwei Werkzeughälften eingeschwenkt wird, das in einer Werkzeugoffenstellung angeordnet ist;
- Überführen der Werkzeughälften des Blasformwerkzeugs (21) aus der Werkzeugoffenstellung in eine Werkzeugschließstellung, so dass die beiden Werkzeughälften einen Hohlraum bilden, in dem der Vorformling (8) aufgenommen ist;
- Blasformen des Vorformlings (8) zu einem Blasformteil und Abkühlen des Blasformteils.

12. Verfahren nach Anspruch 11, wobei beim Aufstülpen des Vorformlings (8) der Vorformling (8) durch eine Vorzentrierung (9) auf den Blasdorn (4) aufgestülpt wird.

13. Verfahren nach Anspruch 12, wobei vor dem Aufstülpen des Vorformlings (8) die Vorzentrierung (9) in eine Schließstellung und vor dem Verschwenken der Blasdorneinheit (2) aus der Schließstellung in eine Offenstellung überführt wird.

14. Verfahren nach einem der Ansprüche 11 bis 13, wobei bei dem Verschwenken der Blasdorneinheit (2) ein Linearantrieb (14) betätigt wird, der über einen Schwenkarm (15) und mindestens eine Pendelstütze (16) eine Hubstrebe (17) antreibt, so dass durch Verschwenken der Hubstrebe (17) die Blasdorneinheit (2) verschwenkt wird.

15. Verfahren nach einem der Ansprüche 11 bis 14, wobei bei dem Überführen der Werkzeughälften in die Werkzeugschließstellung Rastelemente (22) der Blasdorneinheit (2) in korrespondierende Rastaufnahmen der Werkzeughälften eingreifen, so dass die Blasdorneinheit (2) in der Werkzeugschließstellung an dem Blaswerkzeug (21) fixiert wird.

## Claims

1. A blow mandrel device (1) for blow molding blow molded parts, having a blow mandrel unit (2) and a holder (3), the blow mandrel unit (2) having a blow mandrel (4) and being held by the holder (3), wherein the blow mandrel unit (2) is pivotally mounted in the holder (3) and the blow mandrel device (1) comprises a pivot unit (5) for pivoting the blow mandrel unit (2) from a first position (6) into a second position (7) different from the first position (6) relative to the holder (3), wherein the first position (6) is a push-on position for a parison (8) onto the blow mandrel (4), **characterized in that** the blow mandrel device (1) comprises a fixing unit (23) for fixing a parison (8) to the blow mandrel (4) after the push-on.

2. The blow mandrel device (1) according to claim 1, wherein the blow mandrel device (1) has a pre-centering (9), by which the parison (8) is guided when it is pushed onto the blow mandrel (4), wherein the pre-centering (9) is preferably formed in several parts.

3. The blow mandrel device (1) according to claim 2, wherein the pre-centering (9) is arranged on the holder (3) and has two pre-centering halves (10), each of which can be transferred from a closed position (11) into an open position (12), wherein the pre-centering (9) is arranged in the first position (6) of the blow mandrel unit (2) in the closed position (11) and in the second position (7) of the blow mandrel unit (2) in the open position (12).

4. The blow mandrel device (1) according to claim 3, wherein the pre-centering (9) in the closed position (11) has an annular guide opening through which the parison (8) is guided when it is turned up onto the blow mandrel (4).

5. The blow mandrel device (1) according to any one of the preceding claims, wherein the swivel unit (5) comprises a swivel kinematic (13) connected to the blow mandrel unit (2) and a linear drive (14), wherein the swivel kinematic can be actuated by the linear drive (14) and is fixed to the holder (3) so that the blow mandrel unit (2) is swivelled between the first (6) position and the second position (7) upon actuation of the linear drive (14).

6. The blow mandrel device (1) according to claim 5, wherein the swivel kinematics (13) comprise a drive arm (15), at least one pendulum support (16) and a lifting strut (17), wherein the drive arm (15) is mechanically connected to the lifting strut (17) via the pendulum support (16) and wherein the drive arm (15) is driven by the linear drive (14), so that when the lifting strut (17) is swiveled under actuation of the linear drive (14), the blow mandrel unit (2) is swiveled

7. The blow mandrel device (1) according to any one of the preceding claims, wherein the first position (6) is oriented relative to the second position (7) at an angle of 70° - 180°, preferably 80° - 120°, and particularly preferably 90°.

8. The blow mandrel device (1) according to any one of the preceding claims, wherein the blow mandrel unit (2) is swiveled from the first position (6) to the second position (7) about a substantially horizontally oriented pivot axis (18) and the blow mandrel device (1) is preferably pivotable about a second substantially vertically oriented pivot axis (19).

9. An arrangement (20) comprising a blow mandrel device (1) according to any one of the preceding claims and a blow mold (21), wherein the blow mold (21) comprises two mold halves having a mold closed position and a mold open position, wherein the parison (8) is swiveled into the blow mold (21) in the second position (7).

10. The arrangement (20) according to claim 9, wherein the blow mandrel unit comprises latching elements (22) for engagement in corresponding latching receptacles of the mold halves in the mold closed position, so that the blow mandrel unit (2) is fixed to the blow mold (21) in the mold closed position.

11. A method of blow molding a blow molded part, the method comprising the steps of:
- Pushing on and, after pushing on, fixing a parison (8) on a blow mandrel (4) of a blow mandrel unit (2) in a first position (6) of the blow mandrel unit (2);
- Swiveling the blow mandrel unit (2) into a second position (7) different from the first position (6), wherein the parison (8) is swiveled into a blow mold (21) with two mold halves during the swiveling, which is arranged in a mold open position;
- Transferring the mold halves of the blow mold (21) from the mold open position to a mold closed position so that the two mold halves form a cavity in which the parison (8) is received;
- Blow molding the parison (8) into a blow molded part and cooling the blow molded part.

12. The method according to claim 11, wherein when the parison (8) is pushed on, the parison (8) is pushed onto the blow mandrel (4) by a pre-centering device (9).

13. The method according to claim 12, wherein, before the parison (8) is pushed on, the pre-centering device (9) is transferred into a closed position, and wherein the pre-centering device (9) is transferred into an open position before the blow mandrel unit (2) is pivoted out of the closed position.

14. The method according to any one of claims 11 to 13, wherein, when the blow mandrel unit (2) is swiveled, a linear drive (14) is actuated, which drives a lifting strut (17) via a drive arm (15) and at least one pendulum support (16), so that the blow mandrel unit (2) is swiveled by swiveling the lifting strut (17).

15. The method according to any one of claims 11 to 14, wherein, when the mold halves are transferred into the mold closed position, latching elements (22) of the blow mandrel unit (2) engage in corresponding latching receptacles of the mold halves, so that the blow mandrel unit (2) is fixed to the blow mold (21) in the mold closed position.

## Revendications

1. Dispositif de mandrin de soufflage (1) pour le moulage par soufflage de pièces moulées par soufflage, avec une unité de mandrin de soufflage (2) et un support (3), dans lequel l'unité de mandrin de soufflage (2) comprend un mandrin de soufflage (4) et est maintenue par le support (3), dans lequel l'unité de mandrin de soufflage (2) est logée de manière pivotante dans le support (3) et le dispositif de mandrin de soufflage (1) comprend une unité de pivotement (5) pour le pivotement de l'unité de mandrin de soufflage (2), d'une première position (6) vers une deuxième position (7) différente de la première position (6), par rapport au support (3), dans lequel la première position (6) est une position de retournement pour une ébauche (8) sur le mandrin de soufflage (4), **caractérisé en ce que** le dispositif de mandrin de soufflage (1) comprend une unité de fixation (23) pour la fixation d'une préforme (8) sur le mandrin de soufflage (4) avec le retournement.

2. Dispositif de mandrin de soufflage (1) selon la revendication 1, dans lequel le dispositif de mandrin de soufflage (1) comprend un pré-centrage (9) par lequel l'ébauche (8) est guidée, lors du retournement, sur le mandrin de soufflage (4), dans lequel le pré-centrage (9) est constitué de préférence de plusieurs pièces.

3. Dispositif de mandrin de soufflage (1) selon la revendication 2, dans lequel le pré-centrage (9) est disposé sur le support (3) et comprend deux moitiés de pré-centrage (10), qui peuvent être amenées chacune d'une position fermée (11) vers une position ouverte (12), dans lequel le pré-centrage (9) est disposé, dans la première position (6) de l'unité de mandrin de soufflage (2), dans la position fermée (11) et, dans la deuxième position (7) de l'unité de mandrin de soufflage (2), dans la position ouverte (12).

4. Dispositif de mandrin de soufflage (1) selon la revendication 3, dans lequel le pré-centrage (9) comprend, dans la position fermée (11), une ouverture de guidage annulaire, à travers laquelle l'ébauche (8) est guidée lors du retournement sur le mandrin de soufflage (4).

5. Dispositif de mandrin de soufflage (1) selon l'une des revendications précédentes, dans lequel l'unité de pivotement (5) comprend une cinématique rotative (13), reliée avec l'unité de mandrin de soufflage (2), et un entraînement linéaire (14), dans lequel la cinématique rotative peut être actionnée par l'entraînement linéaire (14) et est fixée au support (3) de façon à ce que l'unité de mandrin de soufflage (2) soit pivotée, lors de l'actionnement de l'entraînement linéaire (14), entre la première position (6) et la deuxième position (7).

6. Dispositif de mandrin de soufflage (1) selon la revendication 5, dans lequel la cinématique rotative (13) comprend un bras d'entraînement (15), au moins un appui pendulaire (16) et une chandelle de levage (17), dans lequel le bras d'entraînement (15) est relié mécaniquement avec la chandelle de levage (17) par l'intermédiaire de l'appui pendulaire (16) et dans lequel le bras d'entraînement (15) est entraîné par l'entraînement linéaire (14), de façon à ce que, lors d'un pivotement de la chandelle de levage (17) en actionnant l'entraînement linéaire (14), l'unité de mandrin de soufflage (2) soit pivotée.

7. Dispositif de mandrin de soufflage (1) selon l'une des revendications précédentes, dans lequel la première position (6) est orientée, par rapport à la deuxième position (7), avec un angle de 70°-180°, de préférence 80°-120° et plus particulièrement de préférence de 90°.

8. Dispositif de mandrin de soufflage (1) selon l'une des revendications précédentes, dans lequel l'unité de mandrin de soufflage (2) peut être pivotée de la première position (6) vers la deuxième position (7) autour d'un axe de pivotement (18) orienté globalement horizontalement et le dispositif de mandrin de soufflage (1) peut être pivoté de préférence autour d'un deuxième axe de pivotement (19) orientée globalement verticalement.

9. Disposition (20) comprenant un dispositif de mandrin de soufflage (1) selon l'une des revendications précédentes et un outil de moulage par soufflage (21), dans lequel l'outil de moulage par soufflage (21) comprend deux moitiés d'outil avec une position fermée d'outil et une position ouverte d'outil, dans lequel l'ébauche (8) est pivotée dans la deuxième position (7) dans l'outil de moulage par soufflage (21).

10. Disposition (20) selon la revendication 9, dans lequel l'unité de mandrin de soufflage comprend des éléments d'encliquetage (22) pour l'emboîtement dans des logements d'encliquetage correspondants des moitiés d'outil dans la position fermée de l'outil, de façon à ce que l'unité de mandrin de soufflage (2) soit fixée, dans la position fermée de l'outil, sur l'outil de moulage par soufflage (21).

11. Procédé de moulage par soufflage d'une pièce moulée par soufflage, dans lequel le procédé comprend les étapes suivantes :
- retournement et, après le retournement, fixation d'une ébauche (8) sur un mandrin de soufflage (4) d'une unité de mandrin de soufflage (2) dans une première position (6) de l'unité de mandrin de soufflage (2) ;
- pivotement de l'unité de mandrin de soufflage (2) vers une deuxième position (7) différente de la première position (6), dans lequel l'ébauche (8) est pivotée, lors du pivotement, dans un outil de moulage par soufflage (21) avec deux moitiés d'outils, qui est disposé dans une position ouverte de l'outil ;
- passage des moitiés d'outil de l'outil de moulage par soufflage (21) de la position ouverte de l'outil vers une position fermée de l'outil, de façon à ce que les deux moitiés d'outil forment une cavité dans laquelle l'ébauche (8) est logée ;
- moulage par soufflage de l'ébauche (8) en une pièce moulée par soufflage et refroidissement de la pièce moulée par soufflage.

12. Procédé selon la revendication 11, dans lequel, lors du retournement de l'ébauche (8), l'ébauche (8) est retournée par un pré-centrage (9) sur le mandrin de soufflage (4).

13. Procédé selon la revendication 12, dans lequel, avant le retournement de l'ébauche (8), le pré-centrage (9) est amenée dans une position fermée et, avant le pivotement de l'unité de mandrin de soufflage (2), de la position fermée vers une position ouverte.

14. Procédé selon l'une des revendications 11 à 13, dans lequel, lors du pivotement de l'unité de mandrin de soufflage (2), un entraînement linéaire (14) est actionné, qui entraîne, par l'intermédiaire d'un bras pivotant (15) et d'au moins un appui pendulaire (16), une chandelle de levage (17), de façon à ce que l'unité de mandrin de soufflage (2) soit pivotée par le pivotement de la chandelle de levage (17).

15. Procédé selon l'une des revendications 11 à 14, dans lequel, lors du passage des moitiés d'outil dans la position fermée de l'outil, des éléments d'encliquetage (22) de l'unité de mandrin de soufflage (2) s'emboîtent dans des logements d'encliquetage des moitiés d'outil, de façon à ce que l'unité de mandrin de soufflage (2) soit fixée dans la position fermée de l'outil sur l'outil de soufflage (21).
